# EUROPEAN PATENT APPLICATION

(11) **EP 2 830 294 A1**
(43) Date of publication of application: **28.01.2015**
(21) Application number: 13177599.1
(22) Date of filing: 23.07.2013
(51) Int. Cl.: H04M 1/2745, H04M 1/725, G06F 17/30, H04W 8/18, H04W 4/02

(54) **Location-dependent contextual contacts**

(71) Applicant: BlackBerry Limited, Waterloo, ON N2K 0A7 (CA)
(72) Inventor: Thakar, Rahul, Mississauga, Ontario L4W 0B5 (CA); Ibdah, Abdallah, Kanata, Ontario K2K 3K1 (CA)
(74) Representative: Patel, Binesh

(57) **Abstract**

A method for updating location-dependent contact information entails, at a first location, storing first location-dependent contact information for a first service-providing entity as a contact in an address book in a memory of the mobile device (400), determining a current location of the mobile device (410), and in response to determining that the current location has changed from the first location to a second location, automatically updating the address book by replacing the first location-dependent contact information in the address book with second location-dependent contact information for a second entity equivalent to the first entity (420).

## Description

### TECHNICAL FIELD

The present technology relates generally to mobile devices and, in particular, to location-based services for mobile devices.

### BACKGROUND

Mobile devices or wireless communications devices may search for local services using a web browser and search engine. For example, searching for a local service-providing entity like a taxi or dentist may be done by launching a browser and doing a local keyword search for "taxi" or "dentist". This will return a list of search results and/or a map with locations of nearby taxis or dentists plotted on the map. Another known technique is to consult a service-listing and rating website such as Yelp or Poynt. It would be desirable to provide a more efficient or alternate means of obtaining contact information for a local service-providing entity.

### BRIEF DESCRIPTION OF THE DRAWINGS

Further features and advantages of the present technology will become apparent from the following detailed description, taken in combination with the appended drawings, in which:

FIG. 1 is a depiction of a mobile device on which the present technology may be implemented, the depiction including a schematic depiction of some components of the mobile device;

FIG. 2 depicts a mobile device displaying personal and contextual contacts in an address book;

FIG. 3 depicts the mobile device after the contextual contacts have been updated in response to detecting that the device has moved to a new location;

FIG. 4 depicts a system for updating the contact information;

FIG. 5 depicts another system for updating the contact information;

FIG. 6 depicts a mobile device receiving user input to select a contextual contact;

FIG. 7 depicts a mobile device presenting detailed information about a recommended entity in response to selecting the contextual contact;

FIG. 8 is a flowchart depicting a method of updating contact information;

FIG. 9 is a flowchart depicting a method of selecting the second entity from a web search;

FIG. 10 is a flowchart depicting a method of selecting a sponsored search result as the second entity; and

FIG. 11 is a flowchart depicting a method of selecting the second entity from a recommendation obtained from a social network.

It will be noted that throughout the appended drawings, like features are identified by like reference numerals.

### DETAILED DESCRIPTION

The present technology enables a mobile device to store entities such as a taxi service, dentist, doctor, etc as contacts in an address book. The entities are automatically updated based on location. Therefore, if the mobile device moves from one city or region to another, the entities are automatically replaced by an equivalent local entity. The replacement entity may be selected from amongst local entities using one or more criteria such as proximity to the mobile device's current location, similarity to the home-based entity, cost, rating, any affiliation or association, hours of operation, accepted modes of payment, languages spoken, etc. Alternatively, placement/selection of the local entity may be based on a paid advertising paradigm or a bid-for-placement model in which local entities pay or bid to be selected as the replacement entity. Social graphs, mobile user profiles, usage patterns, demographic information, etc. may be used to target certain subsets of mobile subscribers to enable ads to be more appropriately placed.

Accordingly, an inventive aspect of the present technology is a method for updating location-dependent contact information. The method entails, at a first location, storing first location-dependent contact information for a first service-providing entity as a contact in an address book in a memory of the mobile device, determining a current location of the mobile device, and in response to determining that the current location has changed from the first location to a second location, automatically updating the address book by replacing the first location-dependent contact information in the address book with second location-dependent contact information for a second entity equivalent to the first entity.

Another aspect of the present technology is a computer-readable medium comprising instructions in code which when loaded into a memory and executed by a processor of a mobile device cause the mobile device to, at a first location, store first location-dependent contact information for a first service-providing entity as a contact in an address book in a memory of the mobile device, determine a current location of the mobile device, and in response to determining that the current location has changed from the first location to a second location, automatically update the address book by replacing the first location-dependent contact information in the address book with second location-dependent contact information for a second entity equivalent to the first entity.

Another aspect of the present technology is a mobile device having a memory for storing, at a first location, first location-dependent contact information for a first service-providing entity as a contact in an address book, a position-determining subsystem for determining a current location of the mobile device, and a processor operatively coupled to the memory for determining that the current location has changed from the first location to a second location, the processor being configured to automatically update the address book by replacing the first location-dependent contact information in the address book with second location-dependent contact information for a second entity equivalent to the first entity.

The details and particulars of these aspects of the technology will now be described below, by way of example, with reference to the drawings.

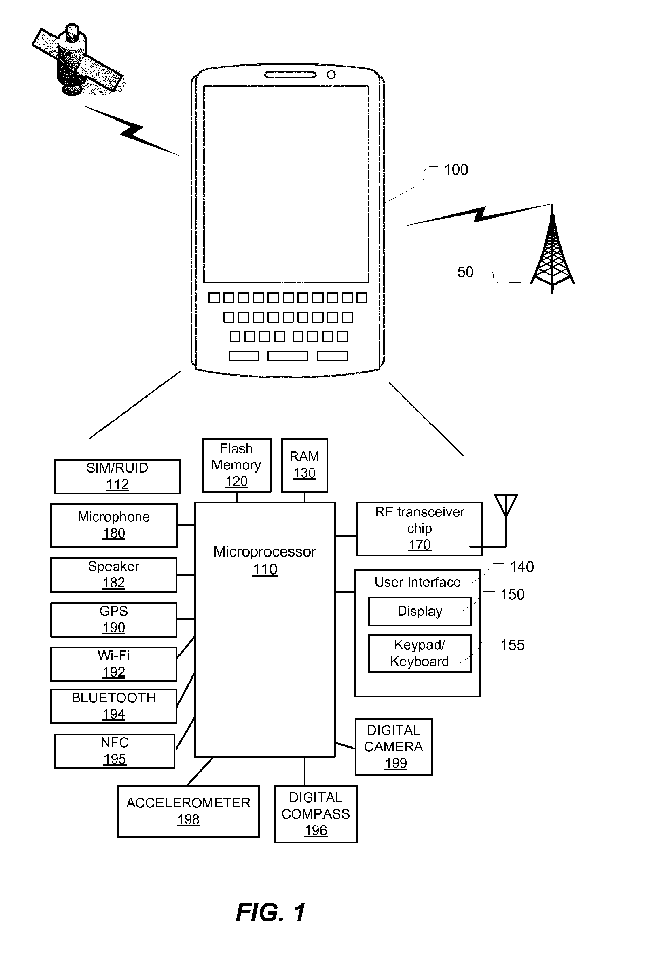

FIG. 1 is a depiction of a wireless communications device as one example of a mobile device 100 that may be used to implement this novel technology. Examples of a mobile device or wireless communications device include cell phones, smart phones, mobile phones, portable digital assistants, tablets, laptops, notebooks or any other such portable, mobile or handheld electronic communications devices.

As illustrated by way of example in FIG. 1, the mobile device 100 has a processor 110 and a memory 120, 130. The memory of the mobile device 100 may include flash memory 120 and/or random access memory (RAM) 130 although other types or forms of memory may be used. The device may also include expandable memory in the form of a removable microSD memory card. The memory stores, when the device is positioned at a first geographical location, first location-dependent contact information for a first service-providing entity. This is stored as a generic contextual contact in an address book (e.g. "taxi", "dentist", "doctor"). The contact information may include a person's name, phone number, fax number, e-mail address, website, or any other information that enables the user to communicate with the contact.

The mobile device 100 includes a position-determining subsystem 190 (e.g. a GNSS receiver such as a GPS receiver) for determining a current location of the mobile device. The processor 110 is operatively coupled to the memory 120, 130 (and to the position-determining system 190) for determining that the current location has changed from the first location to a second location. The processor is configured to automatically update the address book by replacing the first location-dependent contact information in the address book with second location-dependent contact information for a second entity equivalent to the first entity.

As depicted by way of example in FIG. 1, the mobile device 100 includes a user interface 140 for interacting with the mobile device and its applications. The user interface 140 may include one or more input/output devices, such as a display screen 150 (e.g. an LCD or LED screen or touch-sensitive display screen e.g. an Active-Matrix Organic Light-Emitting Diode touchscreen display or equivalent), and a keyboard or keypad 155. A pure touch-screen device may provide a virtual keyboard onscreen and thus need not have a physical keyboard. The user interface may also optionally include any other input devices such as an optical jog pad, thumbwheel, trackball, track pad, etc.

As depicted by way of example in FIG. 1, the mobile device 100 may include a wireless transceiver 170 for communicating with other devices. The transceiver 170 may be a radiofrequency (RF) transceiver for wirelessly communicating with one or more base stations over a cellular wireless network using cellular communication protocols and standards for both voice calls and packet data transfer such as GSM, CDMA, GPRS, EDGE, UMTS, LTE, etc. Where the computing device 100 is a wireless communications device, the device may include a Subscriber Identity Module (SIM) card 112 for GSM-type devices or a Re-Usable Identification Module (RUIM) card for CDMA-type devices. The RF transceiver 170 may include separate voice and data channels.

The mobile device 100 may optionally include one or more ports or sockets for wired connections, e.g. USB, HDMI, FireWire (IEEE 1394), etc. or for receiving non-volatile memory cards, e.g. SD (Secure Digital) card, miniSD card or microSD card.

For voice calls, the mobile device 100 includes a microphone 180, a speaker 182 and/or an earphone jack. Optionally, the device may include a speech-recognition subsystem for transforming voice input in the form of sound waves into an electrical signal. The electrical signal is then processed by a speech-recognition module (digital signal processor) to determine voice commands from the voice input. Voice commands may be used to initiate a call to a contact or to search an address book for a contact.

The position-determining subsystem 190 may be a Global Positioning System (GPS) receiver (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any global navigation satellite system (GNSS), i.e. any other satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system.

Optionally, the mobile device 100 may include a Wi-Fi™ transceiver 192 (e.g. IEEE 802.11 a/b/g/n), a Bluetooth® transceiver 194, and/or a near-field communications (NFC) chip 195. The mobile device 100 may also optionally include a transceiver for WiMax^{™} (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 (magnetometer) and/or a tilt sensor or accelerometer 198. The device may optionally include other sensors such as a proximity sensor, ambient light sensor, and gyroscope. Optionally, the mobile device may include a digital camera 199.

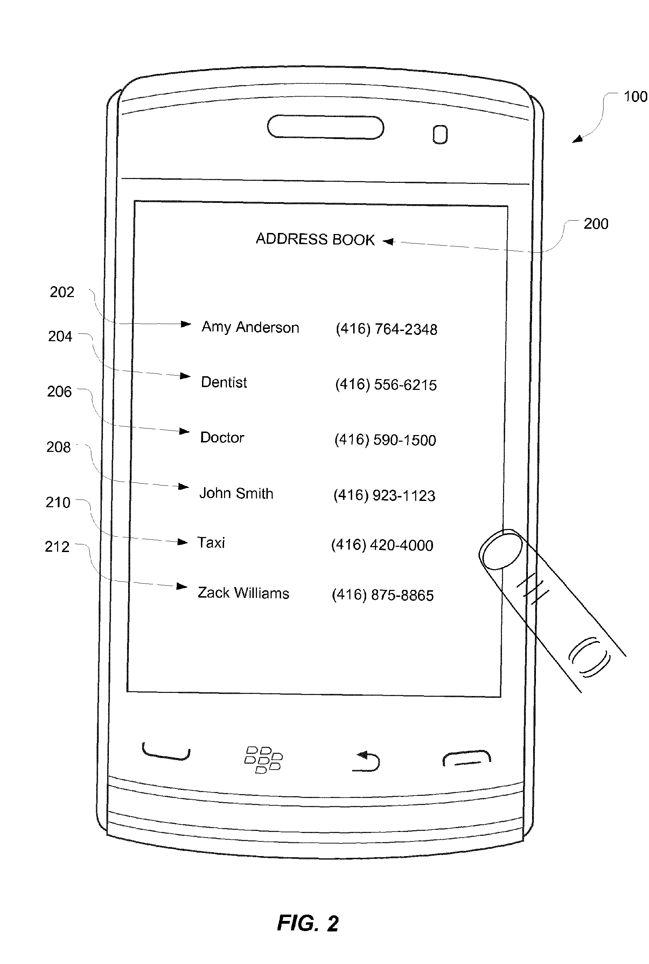

The mobile device 100 uses its memory 120, 130 to store service-providing entities such as a taxi service, dentist, doctor, etc as contacts in an address book (or contacts list) stored in the memory of the mobile device. The address book stores traditional personal contacts that have been entered or imported by the user (John Smith, Bob Jones, Amy Hart, etc.) along with service-providing entities (dentist, taxi, doctor, lawyer, hairdresser, chiropractor, etc.), i.e. generic contextual contacts. The personal contacts may be entered or input manually by typing in the contact information, or these may be imported or received by e-mail, NFC, or any other means. Likewise, the contextual contacts may be entered or input manually by typing in the contact information, copying or pasting the contact information, speaking the contact information to a voice-recognition module, or importing or receiving by e-mail, NFC, or any other means. The contextual contacts and personal contacts may be stored in the same address book or they may be stored in separate lists within a partitioned address book or within separate address books. The contacts within the address book may be displayed onscreen as shown by way of example in FIG. 2. In this figure, the mobile device 100 displays an address book 200 (or address book interface of an address book application executed by the processor of the mobile device). The address book in the example of FIG. 2 contains six contacts, namely Amy Anderson 202, Dentist 204, Doctor 206, John Smith 208, Taxi 210 and Zack Williams 212. These contacts may be organized in alphabetical order or in any other order. Amy Anderson 202, John Smith 208 and Zack Williams 212 are personal contacts. These are not updated based on changes in the device location. Dentist 204, Doctor 206 and Taxi 210, on the other hand, are contextual contacts. These contextual contacts are updated by the device in response to the device detecting a change in its own location.

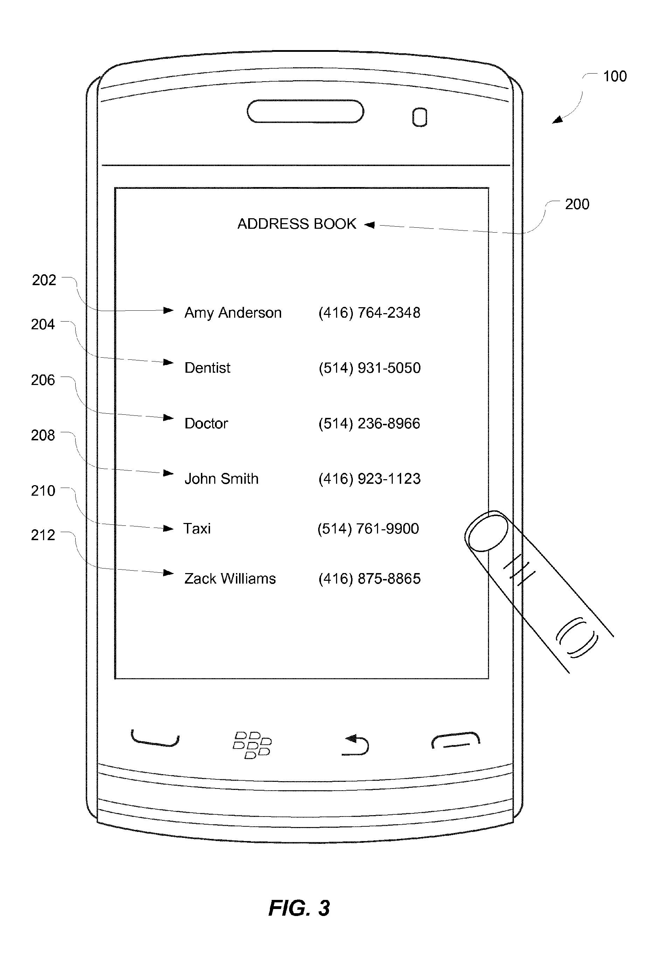

FIG. 3 depicts the address book after the device has updated the contextual contacts. In this example, the mobile device 100 has moved from its home city (e.g. Toronto with an area code of 416) to Montreal (with an area code of 514). The dentist, doctor and taxi entities have been replaced with Montreal-based entities. Specifically, the Toronto-area dentist has been replaced with a Montreal-area dentist. The Toronto-area doctor has been replaced with a Montreal-area doctor. The Toronto-area taxi service has been replaced with a Montreal-area taxi service. The contact information for each of these entities has been updated, as shown in FIG. 3. The contact information in these examples includes the telephone number (as shown) but may also include any other contact information such as street address, website, email address, mobile number, fax number, etc. The contact information may include any alternate numbers or aliases for communicating with the replacement entity.

The mobile device automatically updates the service-providing entities based on location (more particularly a change in location). The mobile device may detect a change in location by periodically obtaining a position fix and then computing a distance between GPS coordinates of a first location and GPS coordinates of a second location. If the distance between the first and second location is greater than a predetermined threshold, then the device updates its contextual contacts. Alternatively, if the GPS receiver is on, the device may periodically query a GPS location cache (where GPS data is stored) to determine if the location has changed. Alternatively, the device may reverse geocode GPS coordinates for the first location to determine a name of a city, town, municipality, region, province, state, etc. On traveling to a second location, the device reverse geocodes the second location to determine a name of a city, town, municipality, region, province, state, etc. If the name of the city, municipality, region, province, state, etc has changed, then this triggers the updating of contextual contacts. A change in location may also be based on a cell tower identification, roaming status, Wi-Fi Positioning or any other location-determining technique. Automatically updating means that the updating process occurs in the background without user intervention or user input triggering the automatic update. Alternatively, the device may be configured to update contextual contacts in response to user input.

Updating the entities involves replacing first contact information for a first entity (or "first contextual contact") with second contact information for a second entity (or "second contextual contact"). As such, the service-providing entities are location-dependent contacts or location-variable contacts since they are dynamically updated by the device in response to the device detecting a change in location (i.e. the device detecting that it is now in a new city, region, area, etc.). Therefore, if the mobile device moves from one city or region to another, the entities are automatically replaced by an equivalent local entity. The replacement entity may be selected from amongst local entities using one or more criteria such as proximity to the mobile device's current location, similarity to the home-based entity, cost, any affiliation or association, modes of payment, hours of operation, languages spoken, etc. Alternatively, placement/selection of the local entity may be based on a paid advertising paradigm or a bid-for-placement model in which local entities pay or bid to be selected as the replacement entity.

Advertising entities may, in one implementation, target certain mobile subscribers by configuring an ad-placement tool to identify potential customers or clients based on subscriber profiles, demographics, etc. Social graphs, mobile user profiles, usage patterns, demographic information, etc. may be used to target certain subsets of mobile subscribers to enable ads to be more appropriately placed. For example, an advertising entity may only wish to place ads for mobile subscribers between certain ages, speaking a certain language, etc.

In one implementation, the automatically updating entails causing a search engine to perform a web search for service-providing entities that provide a same service as the first service-providing entity and selecting the second entity from search results obtained from the web search. For example, the device may automatically (i.e. without user intervention) launch a browser and load a search engine and enter a search query to search a city or region and the service in question, e.g. "Montreal and dentist", "Montreal dentist", etc. The browser, search engine and search may be displayed onscreen or this may occur in the background without displaying the browser or search engine onscreen. In most cases, the search engine will generate a listing of search results (hits). The device may select the first result to be the second entity. Alternatively, the device may perform its own filtering of the top results returned by the search engine. The device may fetch or download content from the respective web pages associated with the top search results and determine whether sufficient contact information may be gleaned from the web pages.

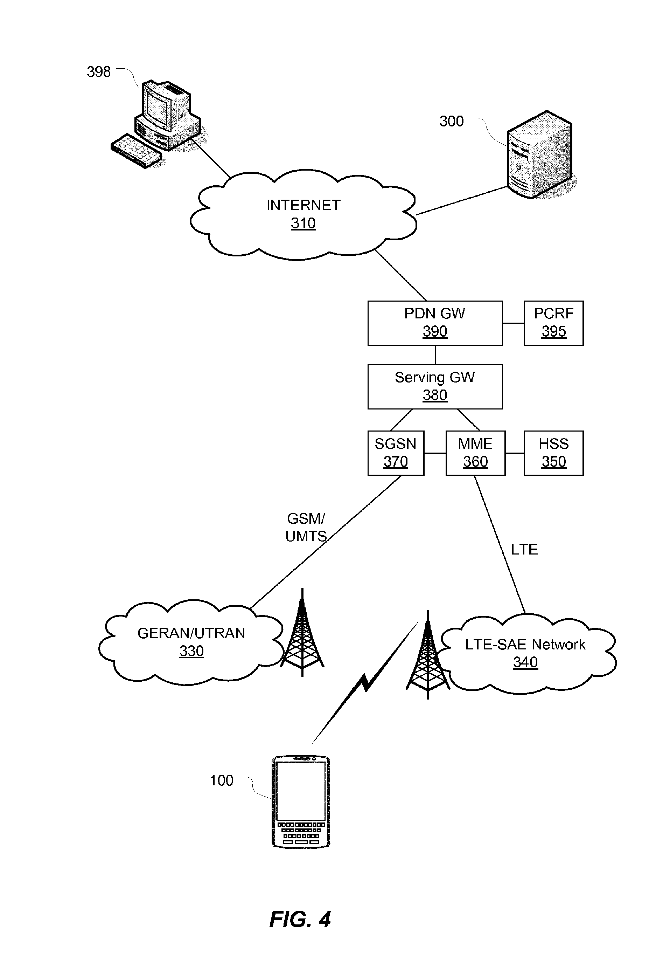

FIG. 4 depicts a system for performing a web-based search for a second entity to replace a first entity stored in the address book of a mobile device. The mobile device 100 obtains the replacement entity (second entity) from a web search performed by a search engine on a web server 300. The mobile device 100 automatically launches a web browser, opens a search engine webpage and transmits a search query to web server 300 through the Internet 310. The data packets sent and received by the mobile device are communicated through a wireless data network represented schematically in FIG. 4 by the GERAN/UTRAN network 330 and the LTE-SAE network 340. A 4G device will communicate via the LTE (Long-Term Evolution - System Architecture Evolution) network whereas a 3G device will access the IP network via GERAN (GSM EDGE Radio Access Network) or UTRAN (Universal Terrestrial Radio Access Network for a UMTS radio access network). LTE data packets are handled by mobile management entity (MME) 360 whereas GSM/UMTS data packets are handled by serving GPRS support node (SGSN) 370. A Home Subscriber Server (HSS) 350, serving gateway 380 and packet data network gateway 390. A Policy Charging and Rules Function (PCRF) 395 provides Quality-of-Service (QoS) information to the packet data network gateway, dynamically manages data sessions, and also determines a charging policy for packets.

In one embodiment, the search results may include one or more sponsored search results (i.e. ads). The device may be configured to accept one of the sponsored search results as the second entity if it meets the minimal requirements or preferences of the user. In other words, the method may involve receiving a sponsored search result from an advertising entity and selecting the sponsored search result as the second entity. In FIG. 4, the advertising entity uses computer 398 to communicate with search engine web server 300 to pay for ad placement or to bid for ad placement. In one specific embodiment, the sponsored search result is a targeted sponsored search result determined based on competitive bidding amongst advertising entities and further refined based on mobile subscriber profiles.

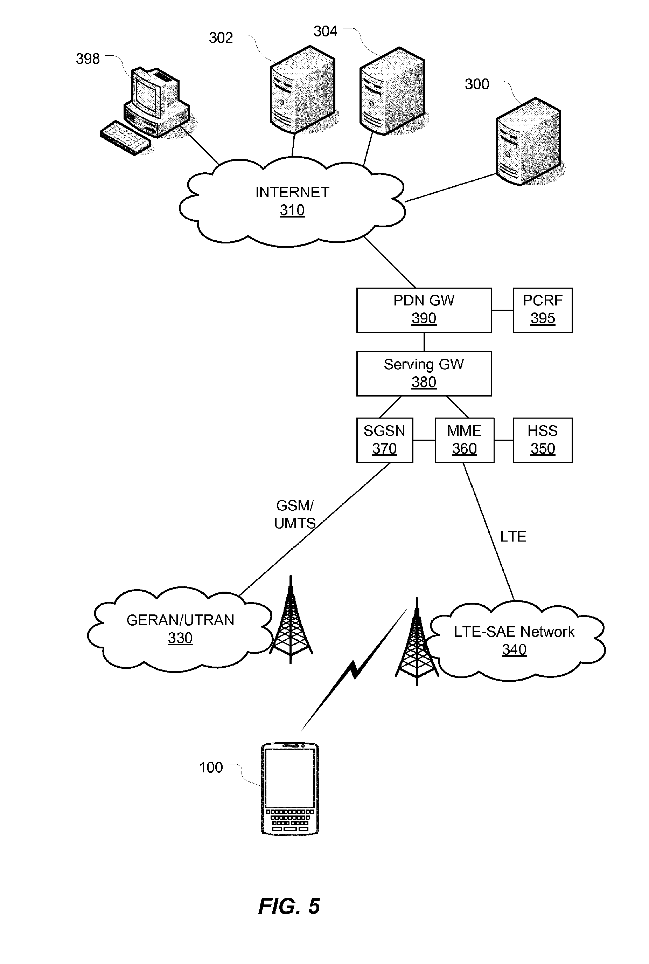

In the implementation depicted by way of example in FIG. 5, the system includes a service-rating website hosted by a respective web server 302. The mobile device searches the service-rating website for a highly rated or top-ranked service-providing entity to replace the first entity in the address book. This may entail causing a search engine to perform a web search to search a service-rating website. The search uses the second location (e.g. "Montreal", "Toronto", "New York City",) and a service-identifying keyword (e.g. "dentist", "taxi", "hairdresser") as search terms to identify a top-rated service-providing entity for the second location. Examples of a service-rating website are Yelp, Poynt, etc.

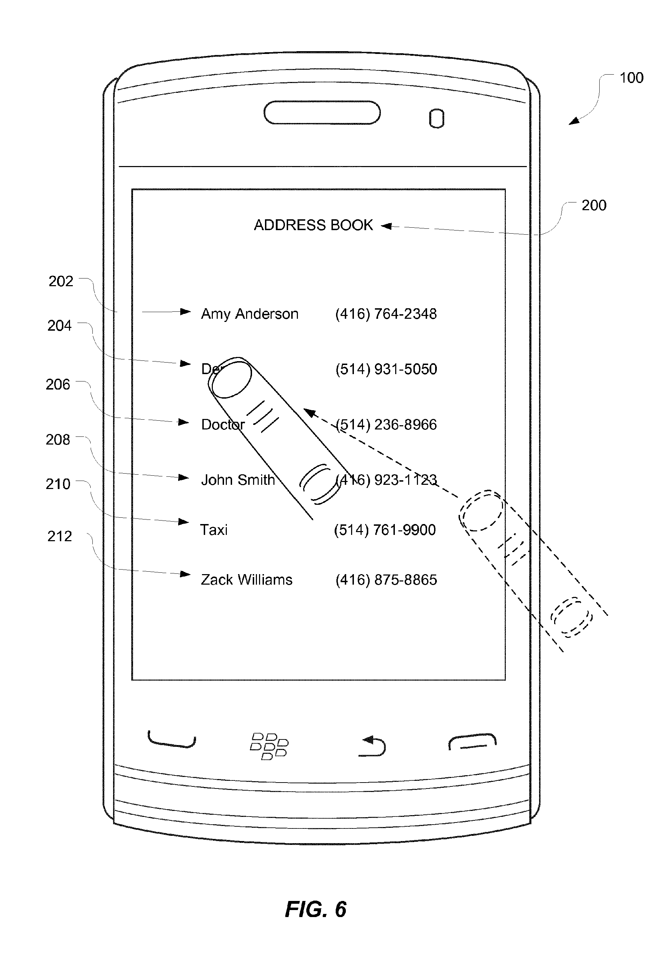

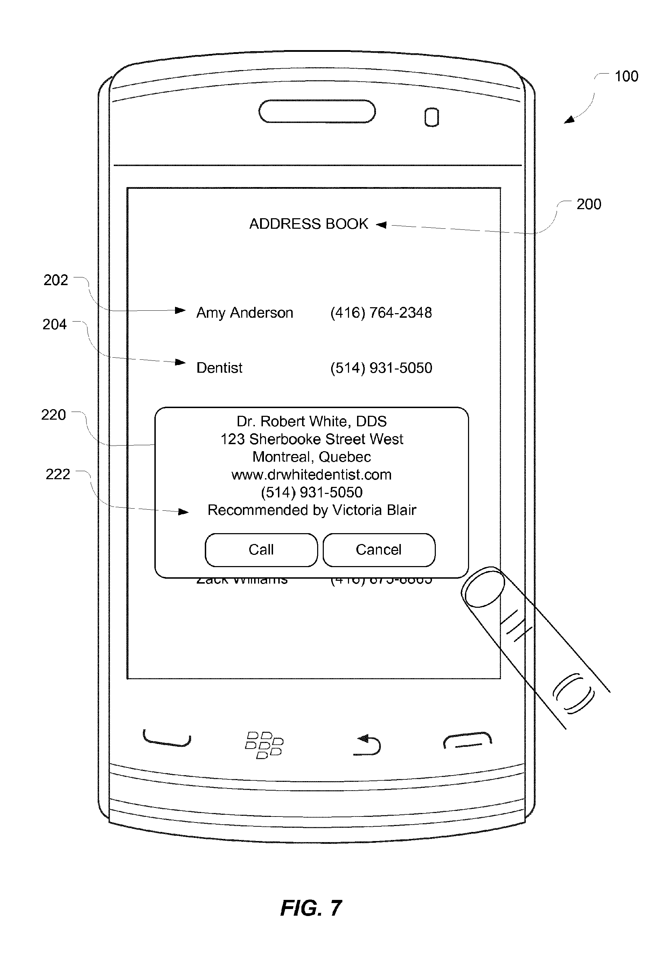

In another implementation depicted by FIG. 5, the mobile device communicates with a social network hosted by a web server 304. The mobile device transmits a search request to a social network website to identify social network contacts in the second location and to identify any replacement entities associated with the social network contacts. In a variant, the search of the social network may identify recommendations or recommended (or endorsed) contacts. For example, Linkedln® shows contacts, recommendations and endorsements. Where these are shared and thus accessible by the mobile device, the device can select a recommended or endorsed contact to become the second service-providing entity for the second location. Finding a recommended or endorsed contact for another city or region (a second location) thus requires the device to search the social network for a friend residing at the second location and then to search the friend's contacts to identify any recommended or endorsed contacts that are equivalent to the service-providing entity. The source of the recommendation or endorsement and/or any applicable reviews, comments, ratings, rankings, or other relevant information may be displayed by the mobile device. For example, FIG. 6 depicts a user providing touch input to select a contextual contact (e.g. Dentist). FIG. 7 depicts the mobile device displaying a text box 220 with recommendation information 222.

The device may take user preferences into account in selecting the second entity from the top hits (e.g. languages spoken, modes of payment, proximity to current location, etc.). For example, an English-speaking device user visiting Düsseldorf, Germany may wish to have a service-providing entity such as a doctor, dentist, etc. having proficiency in English.

Another relevant factor that the device may consider is the current time. The device may obtain hours of operation from the website associated with the search result. The device may verify whether the current time falls within the hours of operation of the second entity. If the current time no longer matches the hours of operation, the device may further update the second entity to a further entity having hours of operation matching the current time. In that sense, the second entity may be dynamically updated based on time.

User preferences may be specified in a settings or options page for managing the contextual contacts. Certain user preferences may be inferred from device settings, e.g. determining a language preference based on a device language setting. In one optional embodiment, the device may propose two or more candidates to the user for approval before updating the address book.

The device may be configured to perform semantic searching or to expand a search by using synonyms (e.g. "taxi" for "cab"). The device may also translate a service-identifying keyword of a search query into a local language and perform the search using a local term. For example, if the device is located in France, then the service-identifying keyword "doctor" may be translated to "*médecin*". If the device is currently located in Germany, then the service-identifying keyword "dentist" may be translated to "*zahnarzt*".

Although the second service-providing entity replaces the first service-providing entity in the address book, the first service-providing entity is retained in most embodiments (i.e. remains stored in memory and is not deleted or purged from the memory 120, 130 of the mobile device). All replaced entities may be stored in a replaced entities file stored in the memory 120, 130 of the device. This file enables the mobile device 100 to reinstate the first service-providing entity upon returning to the home city or home region. Second entities may optionally be stored permanently so that the device can retrieve these immediately and without conducting further searches if the device returns to the second location. For example, if a user frequently visits another city (second location), then the device may retain the contextual contacts for the second location rather than searching for new contextual contacts every time the device visits the second location.

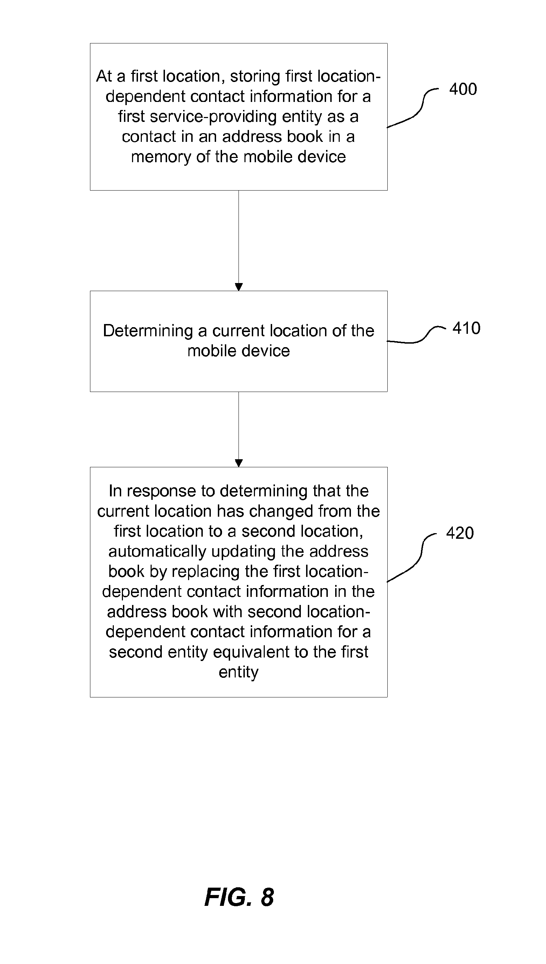

The device and system disclosed above also enable a novel method for updating location-dependent contact information. As depicted by FIG. 8, the method entails a step, act or operation 400 of, at a first location, storing first location-dependent contact information for a first service-providing entity as a contact in an address book in a memory of the mobile device, a step, act or operation 410 of determining a current location of the mobile device, and a step, act or operation 420 of, in response to determining that the current location has changed from the first location to a second location, automatically updating the address book by replacing the first location-dependent contact information in the address book with second location-dependent contact information for a second entity equivalent to the first entity.

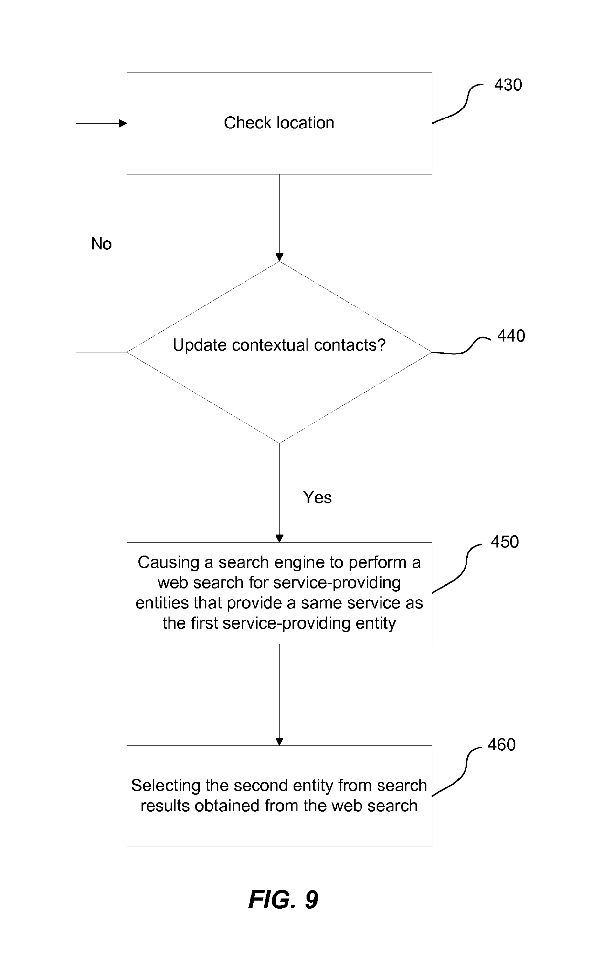

As depicted in FIG. 9, the device periodically checks its location (at 430) to determine if the location has changed sufficiently to require automatically updating the contextual contacts. If a decision (at 440) is made to update contextual contacts, the method proceeds to step, act or operation 450 which entails causing a search engine to perform a web search for service-providing entities that provide a same service as the first service-providing entity. Subsequent to step, act or operation 450, the method involves a step, act or operation 460 of selecting the second entity from search results obtained from the web search. In a variant of this method, updating involves searching a service-rating website to identify a top-rated service-providing entity for the second location using the second location and a service-identifying keyword as search terms.

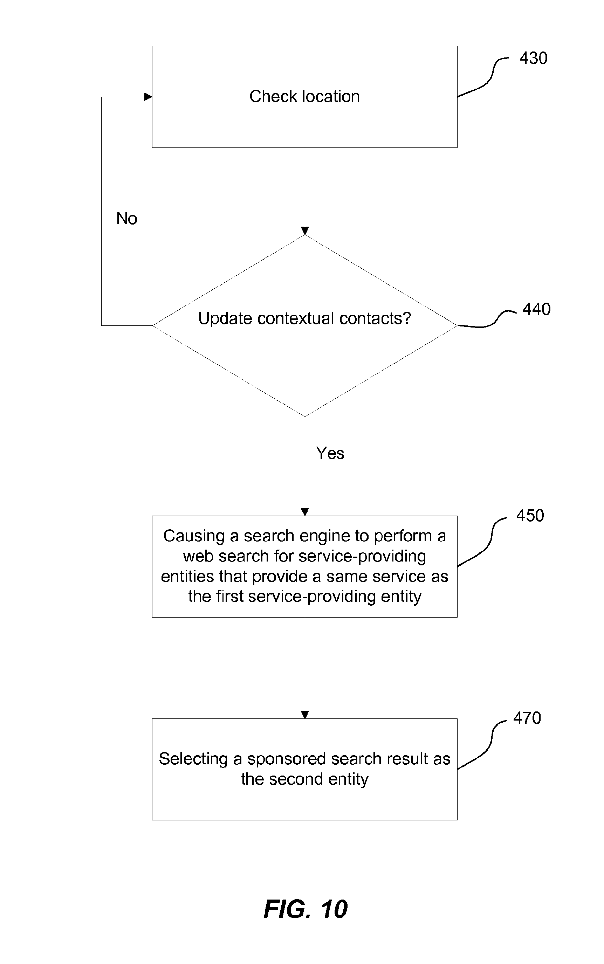

FIG. 10 depicts an alternative method in which the subsequent step, act or operation 470 (following 450) involves selecting a sponsored search result as the second entity. As noted above, the sponsored search result may be a targeted sponsored search result determined based on competitive bidding amongst advertising entities. The results or ads may be filtered or refined based on mobile subscriber profiles.

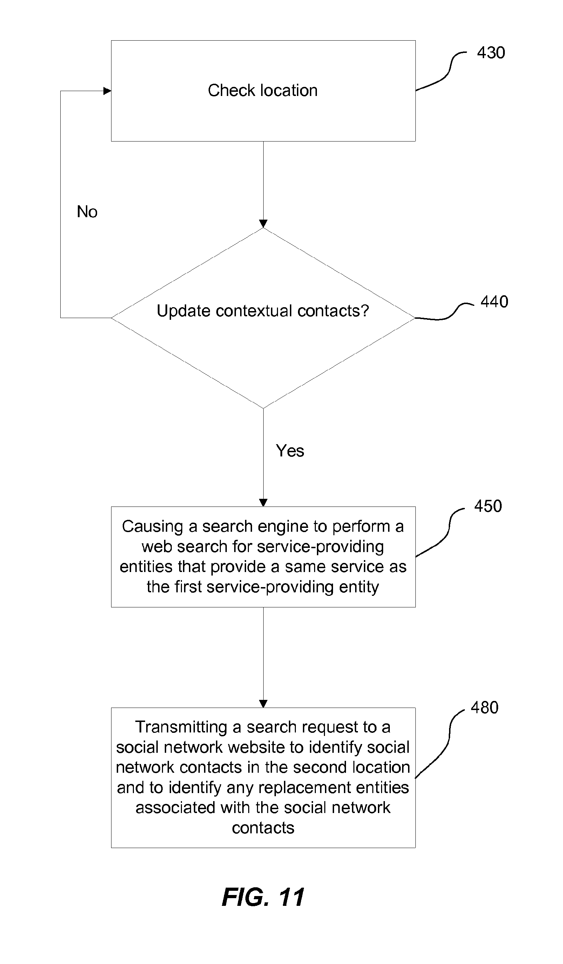

FIG. 11 depicts an alternative method in which a search request is transmitted (step, act or operation 480) to a social network website (following 450) to identify social network contacts in the second location and to identify any replacement entities associated with the social network contacts.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A method for updating location-dependent contact information, the method comprising:
at a first location, storing first location-dependent contact information for a
first service-providing entity as a contact in an address book in a memory of the mobile device;
determining a current location of the mobile device; and
in response to determining that the current location has changed from the
first location to a second location, automatically updating the address book by replacing the first location-dependent contact information in the address book with second location-dependent contact information for a second entity equivalent to the first entity.

2. The method as claimed in claim 1 wherein automatically updating comprises:
causing a search engine to perform a web search for service-providing
entities that provide a same service as the first service-providing entity; and
selecting the second entity from search results obtained from the web
search.

3. The method as claimed in claim 2 further comprising receiving a sponsored search result from an advertising entity and selecting the sponsored search result as the second entity.

4. The method as claimed in claim 3 wherein the sponsored search result is a targeted sponsored search result determined based on competitive bidding amongst advertising entities and further refined based on mobile subscriber profiles.

5. The method as claimed in any one of claims 1 to 4 wherein automatically updating comprises searching a service-rating website, using the second location and a service-identifying keyword as search terms, to identify a top-rated service-providing entity for the second location.

6. The method as claimed in any one of claims 1 to 5 further comprising transmitting a search request to a social network website to identify social network contacts in the second location and to identify any replacement entities associated with the social network contacts.

7. A computer-readable medium comprising instructions in code which when loaded into a memory and executed by a processor of a mobile device cause the mobile device to perform the method of any preceding claim.

8. A mobile device comprising:
a memory for storing, at a first location, first location-dependent contact
information for a first service-providing entity as a contact in an address book;
a position-determining subsystem for determining a current location of the
mobile device; and
a processor operatively coupled to the memory for determining that the
current location has changed from the first location to a second location, the processor being configured to automatically update the address book by replacing the first location-dependent contact information in the address book with second location-dependent contact information for a second entity equivalent to the first entity.

9. The mobile device as claimed in claim 8 wherein the processor cooperates with a radiofrequency transceiver to:
cause a search engine to perform a web search for service-providing
entities that provide a same service as the first service-providing entity; and
select the second entity from search results obtained from the web search.

10. The mobile device as claimed in claim 9 wherein the radiofrequency transceiver receives a sponsored search result from an advertising entity as the second entity.

11. The mobile device as claimed in claim 10 wherein the sponsored search result is a targeted sponsored search result determined based on competitive bidding amongst advertising entities and further refined based on mobile subscriber profiles.

12. The mobile device as claimed in any one of claims 8 to 11 wherein the radiofrequency transceiver transmits the second location and a service-identifying keyword as search terms for searching a service-rating website to identify a top-rated service-providing entity for the second location.

13. The mobile device as claimed in any one of claims 8 to 12 wherein the processor cooperates with a radiofrequency transceiver to transmit a search request to a social network website to identify social network contacts in the second location and to identify any replacement entities associated with the social network contacts.

## Amended claims

### Amended claims in accordance with Rule 137(2) EPC.

**1.** A method for updating location-dependent contact information, the method comprising:
at a first location, storing first location-dependent contact information for a first service-providing entity as a contact in an address book in a memory of the mobile device;
determining a current location of the mobile device; andin response to determining that the current location has changed from the first location to a second location, automatically updating the address book by replacing the first location-dependent contact information in the address book with second location-dependent contact information for a second entity equivalent to the first entity, wherein automatically updating comprises:
causing a search engine to perform a web search for service-providing entities that provide a same service as the first service-providing entity; and
selecting the second entity from search results obtained from the web search.

**2.** The method as claimed in claim 1 further comprising receiving a sponsored search result from an advertising entity and selecting the sponsored search result as the second entity.

**3.** The method as claimed in claim 2 wherein the sponsored search result is a targeted sponsored search result determined based on competitive bidding amongst advertising entities and further refined based on mobile subscriber profiles.

**4.** The method as claimed in any one of claims 1 to 3 wherein automatically updating comprises searching a service-rating website, using the second location and a service-identifying keyword as search terms, to identify a top-rated service-providing entity for the second location.

**5.** The method as claimed in any one of claims 1 to 4 further comprising transmitting a search request to a social network website to identify social network contacts in the second location and to identify any replacement entities associated with the social network contacts.

**6.** A computer-readable medium comprising instructions in code which when loaded into a memory and executed by a processor of a mobile device cause the mobile device to perform the method of any preceding claim.

**7.** A mobile device comprising:
a memory for storing, at a first location, first location-dependent contact information for a first service-providing entity as a contact in an address book;
a position-determining subsystem for determining a current location of the mobile device; anda processor operatively coupled to the memory for determining that the current location has changed from the first location to a second location, the processor being configured to automatically update the address book by replacing the first location-dependent contact information in the address book with second location-dependent contact information for a second entity equivalent to the first entity, wherein the processor cooperates with a radiofrequency transceiver to:
cause a search engine to perform a web search for service-providing entities that provide a same service as the first service-providing entity; and
select the second entity from search results obtained from the web search.

**8.** The mobile device as claimed in claim 7 wherein the radiofrequency transceiver receives a sponsored search result from an advertising entity as the second entity.

**9.** The mobile device as claimed in claim 8 wherein the sponsored search result is a targeted sponsored search result determined based on competitive bidding amongst advertising entities and further refined based on mobile subscriber profiles.

**10.** The mobile device as claimed in any one of claims 7 to 9 wherein the radiofrequency transceiver transmits the second location and a service-identifying keyword as search terms for searching a service-rating website to identify a top-rated service-providing entity for the second location.

**11.** The mobile device as claimed in any one of claims 7 to 10 wherein the processor cooperates with a radiofrequency transceiver to transmit a search request to a social network website to identify social network contacts in the second location and to identify any replacement entities associated with the social network contacts.
